# EUROPEAN PATENT APPLICATION

(11) **EP 2 763 071 A1**
(43) Date of publication of application: **06.08.2014**
(21) Application number: 13405012.9
(22) Date of filing: 31.01.2013
(51) Int. Cl.: G06F 21/44

(54) **Authentication of a chemical sensor in a portable electronic device**

(71) Applicant: Sensirion AG, 8712 Stäfa (CH)
(72) Inventor: Mayer, Felix, 8712 Stäfa (CH); Bühler, Johannes, 8610 Uster (CH)
(74) Representative: Detken, Andreas

(57) **Abstract**

A chemical sensor (11) of a portable electronic device (1) is authenticated by reading a cryptographic sensor identifier from a memory of the chemical sensor and transmitting sensor-related data from the portable electronic device to a remote evaluation unit (6), the sensor-related data comprising the cryptographic sensor identifier. The sensor-related data may be transmitted in encrypted form. The sensor-related data may be complemented with a device identifier for the portable electronic device.

## Description

### BACKGROUND OF THE INVENTION

The present invention relates to a method of authenticating a chemical sensor of a portable electronic device, to a correspondingly configured portable electronic device, to a corresponding server-based authentication system and to corresponding software.

Portable electronic devices such as mobile phones, tablet computers, notebook computers etc. have become ubiquitous in everyday life. Such devices are nowadays equipped with a multitude of sensors, including gyroscopes, acceleration sensors, magnetic field sensors, proximity sensors, cameras, GPS modules etc. It would be desirable to integrate further sensors into portable electronic devices, in particular, sensors that are sensitive to chemical analytes. Such sensors will in the following be called "chemical sensors".

In particular, semiconductor sensors are known for this purpose. Such sensors have a sensitive layer with at least one electrical property that changes in the presence of one or more analytes. In some embodiments, the sensitive layer must be heated to a certain operational temperature. For instance, metal-oxide sensors are known; these sensors are to be operated at elevated temperatures of a few hundred degrees Celsius. In order to achieve these temperatures in the sensitive layer, a heater thermally coupled to the sensitive layer is heated prior to and/or during taking a sensor reading.

Most chemical sensors are not only sensitive to a single analyte, but exhibit cross-sensitivities to a number of other analytes. The response behavior of such a sensor may be described by a transfer function. The inputs to the transfer function are the concentrations of all analytes to which the sensor is sensitive as a function of time, whereas the output of the transfer function is the raw sensor signal as a function of time. The transfer function can often be reasonably approximated by a linear model, which is characterized by sensor offset, by the sensitivity to a main analyte and by cross-sensitivities to secondary analytes. However, it may be more appropriate to approximate the transfer function by more complex models, which would be characterized by more parameters than a simple linear model, e.g., by adding higher-order terms and/or by taking temporal delays between the inputs and the output into account. The transfer function will generally depend on the operating conditions. For instance, a change in temperature of the sensitive layer will often cause a change in sensitivity for any given analyte.

Several chemical sensors may be combined into a sensor array, or a chemical sensor may comprise a plurality of sensor cells to obtain a multi-analyte sensor. Each individual sensor or sensor cell will then be described by its own transfer function, each transfer function being in turn characterized by a number of parameters of a model that approximates the transfer function.

The transfer function can slowly change over time by sensor drifts, even when the sensor is not operated and in the absence of any chemical stimulus of the sensor. Drift can manifest itself, e.g., by offset and sensitivity drifts. Drift can strongly depend on the sensor history, e.g. on how often the sensor has been operated, intervals between operations, time since last reconditioning procedure, chemicals to which the sensor has been exposed etc., and can be difficult to predict. Drift behavior may vary between sensor batches even if all sensors have the same sensor history, whereas sensors originating from a single batch (in particular, from the same wafer) tend to exhibit similar drift behavior for the same sensor history.

Taking all this together, this means that the raw sensor output signal for a given composition of analytes generally depends on a multitude of factors in a manner that is not easy to predict. It can be a challenging task to calibrate the sensor, i.e., to take all the different factors into account appropriately so as to be able to determine a meaningful sensor reading from the raw sensor output. This is all the more true for multi-analyte sensors. For instance, it can be very challenging to determine the concentrations of a plurality of known analytes of a multi-cell sensor from the raw sensor signals, even if the operating conditions and the sensor history are known. Such determinations may involve computationally expensive algorithms and/or comparison with data that is stored in a database.

It may therefore be desirable to carry out part or all of the analysis in a remote evaluation unit (remote server), e.g., by cloud computing, rather than in the portable electronic device itself. For instance, a remote evaluation unit may be employed for determining calibration values to be applied for transforming the raw sensor signals into a meaningful sensor reading. To this end, the remote evaluation unit may receive data from the sensor and may return the calibration values to the portable electronic device. These values would then be applied to the raw sensor signals locally in the portable electronic device in subsequent measurements.

In such procedures it may be required to uniquely identify the corresponding sensor. This can, in principle, be done by assigning a serial number to each sensor and transmitting the serial number along with each request to the remote evaluation unit.

The data analysis that is carried out in the evaluation unit may require specialist knowledge and may be complex and time-consuming to develop. In consequence the corresponding algorithms and the involved parameters may represent highly valuable know-how, and it may be undesirable to allow an unauthorized third party to take advantage of these algorithms and parameters. However, a third party might be tempted to use the remote evaluation unit without being authorized to do so. For instance, a third party might use forged sensors of the same design as the original sensors and might assign serial numbers to these that follow the same scheme as the serial numbers of the original sensors. Based on the serial number format, the evaluation unit would then falsely assume that the data from the forged sensor originate from an original sensor having the same serial number. The evaluation unit may thus treat the data from the forged sensor as if they originated from the original sensor and may return the result to the portable electronic device containing the forged sensor. This result may be completely meaningless because the calibration data of an original sensor having the same serial number might be applied to signals originating from the forged sensor. Even worse, the evaluation unit might in consequence modify the calibration parameters and other parameters relevant to an original sensor in response to the data sent for the forged sensor. Therefore, also future readings of the original sensor may be compromised, and sensor readings may turn out to be unreliable. Furthermore, by collecting serial numbers of existing original sensors, a third party may draw conclusions about sensitive business-related information such as the number of sensors produced if the serial number format is known.

### SUMMARY OF THE INVENTION

It is an object of the present invention to improve the reliability of results obtained in schemes in which sensor-related data are sent to a remote evaluation unit. It is a further object of the present invention to prevent that forged sensors are mistaken for original sensors.

These and other objects are achieved by a method having the features of claim 1. Further embodiments of the invention are laid down in the dependent claims.

Accordingly, a method for authenticating a chemical sensor of a portable electronic device is provided. The method comprises reading a cryptographic sensor identifier from a memory of the chemical sensor and transmitting sensor-related data from the portable electronic device to a remote evaluation unit (which will in the following be also referred to as a remote server), the sensor-related data comprising the cryptographic sensor identifier. In this manner the evaluation unit is able to detect when unauthorized users try to send sensor data to the evaluation unit.

In the context of the present invention, a cryptographic sensor identifier is a string (in binary format, a sequence of values 0 and 1) of a certain predetermined length. The string encodes the sensor identity in such a manner that it is practically impossible to guess the sensor identifiers that have been assigned to further portable electronic devices if the sensor identifiers that have been assigned to any finite number of portable electronic devices are known already. For instance, the cryptographic sensor identifier may be a pseudorandom number. In other embodiments, the cryptographic sensor identifier is obtained from a clear-text sensor identifier by application of an encryption algorithm. For instance, the cryptographic sensor identifier may be a hash value resulting from the application of a cryptographic hash function to a clear-text sensor identifier such as a sensor serial number.

The chemical sensor comprises a memory. Such a memory may be present for other purposes than authentication only, e.g., in connection with digital circuitry for digital signal processing. The cryptographic sensor identifier may be created by a manufacturer of the sensor at the time of production (e.g., by applying an encryption algorithm to sequential serial numbers) and may be permanently stored in the memory of the chemical sensor. The memory in which the cryptographic sensor identifier is stored is preferably a read-only memory, i.e. a memory whose contents cannot be modified without special circuitry or special equipment. In some embodiments, the cryptographic sensor identifier may be hardware-coded in the memory to prevent manipulation. The method of the present invention comprises reading the cryptographic sensor identifier from the memory. A read request to the memory may trigger an algorithm that transforms the content of the memory into the cryptographic sensor identifier that is provided upon readout only at runtime. However, it is preferred if the cryptographic sensor identifier is stored in the memory in essentially the form in which it is read out.

The evaluation unit may interact with a database, i.e. it may be communicatively connected to a database. The database may store authentication information about a set of chemical sensors. The authentication information may comprise, e.g., a list of valid clear-text or cryptographic identifiers or a list of values related to these identifiers, such as hash values that are themselves derived from the clear-text or cryptographic identifiers by application of a hash function. The evaluation unit may be configured to receive the sensor-related data, to extract the cryptographic sensor identifier from the sensor-related data, and to compare the extracted cryptographic sensor identifier to authentication information stored in the database. In this manner, the evaluation determines whether or not the cryptographic sensor identifier that was sent by the portable electronic device is valid, e.g., whether it is contained in the database. Thereby the chemical sensor is authenticated.

Subject to a result of the authentication, the evaluation unit may carry out further steps. In particular, the evaluation unit may analyze the sensor-related data and/or request further sensor-related data from the portable electronic device to be subsequently analyzed by the evaluation unit. The same database or a second database may contain further database entries associated with the sensor identifier, such as calibration values, information relating to the sensor history, batch information etc., and analysis of the sensor-related data may involve retrieving such further database entries from the database. The method may include returning a result of the data analysis to the portable electronic device and/or modifying at least one database entry (e.g., at least one calibration value) subject to a result of the data analysis. The result may be returned, e.g., in form of a (corrected) sensor reading or in form of calibration values for use in an algorithm to be applied to the raw sensor data for deriving a sensor reading from the raw sensor data.

Preferably, the sensor-related data that contain the cryptographic sensor identifier are transmitted to the server in encrypted form to prevent eavesdropping by an unauthorized third party. In other words, preferably two levels of encryption are employed. On a first level, clear-text sensor identifiers are encrypted by the sensor manufacturer and stored in a memory of the sensor in encrypted form, i.e., as cryptographic sensor identifiers, to prevent forgery. On a second level, sensor-related data that contain these cryptographic sensor identifiers are once more encrypted (preferably by a different encryption algorithm than in the first level) before being sent to the evaluation unit, so as to prevent eavesdropping. For instance, the sensor-related data may be encrypted using a symmetric key algorithm such as the Advanced Encryption Standard (AES) block cipher or the RC4 stream cipher. In the alternative, the sensor-related data may be encrypted by a public-key encryption algorithm such as the RSA algorithm. In both cases, the evaluation unit may be configured to decrypt the encrypted cryptographic sensor identifier accordingly. Transmission of sensor-related data in encrypted form would also be useful if the sensor-related data contained a clear-text sensor identifier rather than a cryptographic sensor identifier, and the method is not restricted to cases where the sensor identifier is a cryptographic sensor identifier.

The reliability of results obtained for original sensors can be further improved if not only the cryptographic sensor identifier is transmitted to the evaluation unit, but in addition also a device identifier for the portable electronic device itself is transmitted. In other words, the sensor-related data that are sent to the evaluation unit preferably further comprise a device identifier for the portable electronic device. The method may then comprise carrying out a consistency check between the cryptographic sensor identifier and the device identifier. In this manner duplication of sensor identifiers by an unauthorized third party can be detected. In particular, if the database connected to the evaluation unit contains both the device identifiers and the associated sensor identifiers of a set of portable electronic devices, the evaluation unit can check whether a received sensor identifier and a received device identifier match, i.e., whether they form a valid pair of identifiers. Furthermore, in this manner device-specific analysis of the sensor-related data can be carried out. In particular, if the evaluation unit or the database contains or is able to obtain information about the device type belonging to a specific device identifier, the evaluation unit can carry out the data analysis in a device-specific manner, e.g., the evaluation unit can take the specific device geometry such as the location of the sensor in the device and the dimensions of the relevant openings in the devices housing etc. into account during data analysis. Transmission of a device identifier in addition to a sensor identifier is also useful if the sensor-related data contain a clear-text sensor identifier, and the method is not restricted to cases where the sensor identifier is a cryptographic sensor identifier.

The device identifier may be any identifier that is permanently associated with the portable electronic device. It is preferably assigned to the portable electronic device by the manufacturer of the portable electronic device or by the manufacturer of a component of the portable electronic device that is different from the sensor, whereas the sensor identifier is assigned to the sensor by the sensor manufacturer, who is normally not identical with the device manufacturer or component manufacturer. The device identifier can include or be derived from one or more of the following, without limitation: an identifier selected by the device manufacturer in an arbitrary format, e.g. an arbitrary clear-text or cryptographic device identifier; an International Mobile Station Equipment Identity (IMEI) number of the portable electronic device; and a Media Access Control (MAC) address of one or more network interfaces of the portable electronic device. For instance, the portable electronic device may comprise at least one communication module, e.g., a Bluetooth module and/or a WLAN module, in particular, according to standard IEEE 802.11, having a particular MAC address. Since the MAC address is normally permanently associated with the communication module, and since the communication modules of modem portable electronic devices are normally not easily replaceable, the MAC address of such a communication module can be considered to represent a valid device identifier for the entire portable electronic device.

The sensor identifier may be associated with a user account of a user of the portable electronic device. The sensor identifier may then be employed to authenticate a user of the user account. The portable electronic device may, for instance, request the user to supply his/her login data for the user account and may send the login data together with the sensor identifier to the evaluation unit for authentication. The evaluation unit or the database may keep records of the login data and the associated sensor identifiers. It may thus compare the login data with the sensor identifier to check whether these items are consistent. It may also create and/or use a user-specific profile for the sensor. For instance, if the portable electronic device is used by different users to carry out breath alcohol measurements or other kinds of breath analyses, the server may create and store (in a database) user-specific calibration data that has been determined in calibration measurements for each user individually. In other embodiments, the portable electronic device might not request any login data, but may simply transmit the sensor identifier and possibly the device identifier to the evaluation unit. The evaluation unit may then query a database containing the sensor identifiers and associated user account data to look up one or more user accounts that is/are associated with the sensor identifier. In this manner, the sensor identifier is employed for user authentication. Associating a sensor identifier with a user account is also useful if the sensor identifier contains clear text, and the method is not restricted to cases where the sensor identifier is a cryptographic sensor identifier.

In another aspect, the present invention provides a portable electronic device. The portable electronic device comprises a chemical sensor having a memory and a control unit. A cryptographic sensor identifier is stored in the memory of the chemical sensor. The control unit is configured to read the cryptographic sensor identifier from the memory and to transmit sensor-related data from the portable electronic device to a remote evaluation unit, the sensor-related data comprising the cryptographic sensor identifier. As discussed above, the control unit may be configured to encrypt the sensor-related data and to transmit the sensor-related data to the remote server in encrypted form. For each task that is mentioned in connection with the above-described method and that is carried out by the portable electronic device, a corresponding module may be provided in the portable electronic device. These modules may be implemented fully or partially in software and/or firmware. All considerations that are discussed in this document in conjunction with the method of the present invention are equally applicable to the portable electronic device.

In yet another aspect, the present invention provides an authentication system for authenticating chemical sensors in portable electronic devices. The system comprises an evaluation unit configured for communication with a plurality of portable electronic devices and a database communicatively connected to the evaluation unit. The database stores authentication information about a set of chemical sensors. The evaluation unit comprises:
a receiving module configured to receive sensor-related data from the portable electronic devices;
an extraction module configured to extract a cryptographic sensor identifier from the sensor-related data; and
a comparison module configured to compare the cryptographic sensor identifier to authentication information stored in the database.

As discussed above, the receiving module may be configured to receive the sensor-related data in encrypted form and to decrypt the sensor-related data. The extraction module may further be configured to extract a device identifier for the portable electronic device from the sensor-related data, and the comparison module may be configured to carry out a consistency check between the cryptographic sensor identifier and the device identifier. For each task that is mentioned in connection with the above-described method and that is carried out by the evaluation unit, a corresponding module may be provided in the authentication system. These modules may be implemented fully or partially in software and/or firmware. All considerations that are discussed in this document in conjunction with the method of the present invention are equally applicable to the authentication system.

In yet another aspect, the present invention provides computer program code elements that carry out central parts of the method of the present invention when executed in a processor. Each computer program element comprises computer-implemented instructions to cause a processor to carry out a particular method. It can be provided in any suitable form, including source code or object code. In particular, it can be stored on a computer-readable medium or embodied in a data stream. The data stream may be accessible through a network, e.g., the Internet.

In particular, the present invention provides a computer program element comprising computer code that, when executed in a processor of a portable electronic device comprising a chemical sensor, carries out the following steps:
reading a cryptographic sensor identifier from a memory of the chemical sensor;
transmitting sensor-related data from the portable electronic device to a remote evaluation unit, the sensor-related data comprising the cryptographic sensor identifier.

In addition, the computer code may be configured to carry out any other task that is mentioned in connection with the above-described method and that is carried out in the portable electronic device.

The present invention further provides a computer program element comprising computer code that, when executed in a processor of an evaluation unit connected to a database, carries out the following steps:
receiving sensor-related data from portable electronic devices;
extracting a cryptographic sensor identifier from the sensor-related data; and
comparing the cryptographic sensor identifier to authentication information stored in the database.

In addition, the computer code may be configured to carry out any other task that is mentioned in connection with the above-described method and that is carried out in the evaluation unit of the above-discussed authentication system.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a mobile phone equipped with a chemical sensor;
- Fig. 2: shows a highly schematic block diagram of the mobile phone of Figure 1;
- Fig. 3: shows a highly schematic top view of a sensor chip of a chemical sensor;
- Fig. 4: shows a highly schematic cut through an individual sensor cell of the sensor chip of Fig. 3;
- Fig. 5: shows an illustration of how a portable electronic device may be connected to an authentication system via a network;
- Fig. 6: shows a highly schematic block diagram of an authentication system; and
- Fig. 7: is a schematic flow diagram illustrating an exemplary embodiment of a method for authenticating a portable electronic device having a chemical sensor and for carrying out subsequent data analysis.

### DESCRIPTION OF PREFERRED EMBODIMENTS

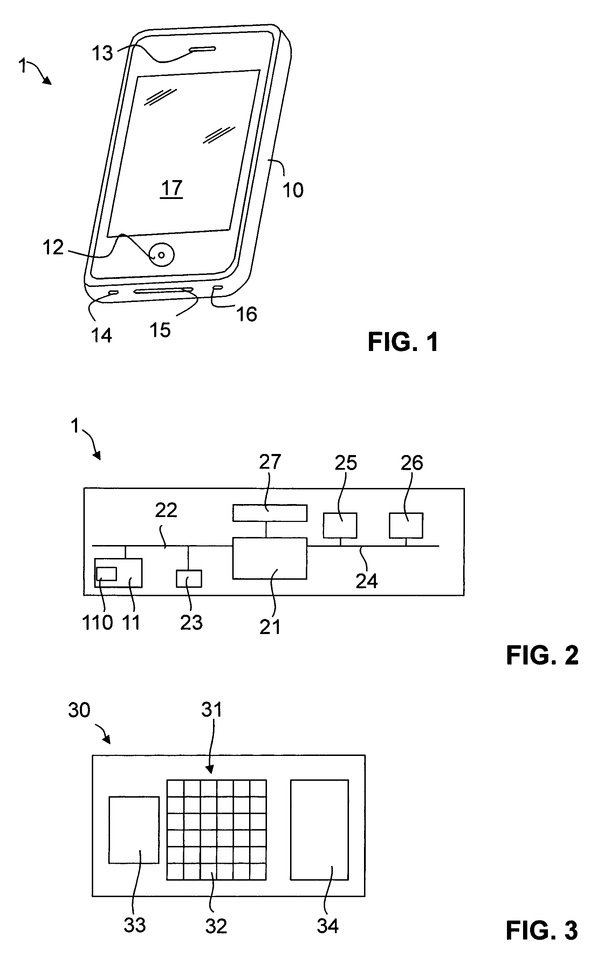

Figure 1 illustrates a portable electronic device in the form of a mobile phone 1. The mobile phone has a housing 10, an input/output device in the form of a touchscreen display 17 and a further input device in the form of a pushbutton 12. Below a first opening 13 in the front of the housing 10, an output device in the form of a loudspeaker is arranged. In a lower sidewall region of the housing 10, further openings 14, 15 and 16 are provided. Behind these openings, components such as a microphone, further loudspeakers and connectors are disposed. In addition, behind any of these openings sensors such as a humidity sensor, a temperature sensor and a sensor for detecting at least one chemical analyte (i.e., one or more chemical sensors) may be arranged. The chemical sensor may comprise one or more sensor cells, each sensor cell exhibiting a different sensitivity to selected analytes. The mobile phone runs an application program (app) or a routine of the operating system for operating the chemical sensor.

Instead of a mobile phone, the portable electronic device may be any of the following: a handheld computer, an electronic reader, a tablet computer, a game controller, a pointing device, a photo or a video camera, or a computer peripheral. This listing is to be understood as not limiting.

Figure 2 shows a schematic hardware-oriented block diagram of the mobile phone 1. A microprocessor 21 is connected via leads 22 to a chemical sensor 11 and at least one further sensor 23 (e.g., a humidity sensor, a temperature sensor, an inertial sensor etc.). The chemical sensor 11 contains a memory 110. A sensor identifier is permanently stored in the memory 110 in cryptographic form, e.g. in the form of a cryptographic hash value of a serial number of the sensor 11. A microprocessor 21 receives sensor signals from the sensor and queries the memory 110 for the cryptographic sensor identifier. A program element that is executed in the microprocessor 21 processes the sensor signals. The microprocessor interacts with a memory 25, which may also store the program element. The mobile phone comprises various wireless data communication interfaces 26, 27, e.g., a UMTS module and a WLAN module, which are also controlled by the microprocessor 21. Input/output devices as previously mentioned may further be connected to the microprocessor 21.

Hence, the mobile phone 1 comprises one or more chemical sensors 11 that are sensitive to at least one chemical analyte. Each of these sensors may comprise one or more semiconductor sensor elements. These semiconductor sensor elements may comprise at least one sensitive layer, for which at least one electrical property (in particular, conductivity) changes in the presence of at least one chemical analyte due to adsorption and/or chemical reactions on the surface of the sensitive layer (including catalytic reactions in which the sensitive layer acts as a catalyst). The sensor may include at least one heat source integrated within the sensor to heat the sensitive layer to an operating temperature thereof. In particular, the sensitive layer may be a metal oxide (MOX) layer. Sensors having at least one MOX layer as a sensitive layer will in the following be called MOX sensors. The metal oxide may be, e.g., tin oxide, tungsten oxide, gallium oxide, indium oxide, or zinc oxide.

Each sensor may comprise two or more sensor elements ("cells") that have different sensitivities to selected analytes. The sensor cells may be arranged in a one- or two-dimensional array. Each sensor cell may provide a sensitive layer of a material exhibiting different sensitivity to some or all of the analytes that the sensor is sensitive to. For instance, each cell of the sensor array may specifically be mainly sensitive to a different analyte and as such may enable the portable electronic device to detect the presence or absence or concentration of such analyte. "Mainly" in this context shall mean that a sensor cell is more sensitive to the subject analyte than to other analytes. However, a sensor cell of such sensor array may exhibit not only sensitivity to its main analyte, but also to analytes other than the main analyte since such sensor cell may exhibit a cross-sensitivity to one or more analytes possibly representing main analytes for other cells. In this case, it is preferred that different sensor cells have different sensitivity profiles for the various analytes that the sensor is sensitive to. For instance, to discuss a particularly simple example, if one cell is sensitive to ethanol with a certain sensitivity and to acetone with a certain other sensitivity, it is preferred that another sensor cell is sensitive with a different ratio of sensitivities to ethanol and acetone, such that by comparing the signals of the two cells, the analytes ethanol and acetone can be separated.

The sensor cells may have different sensitivities to multiple different analytes at different operating conditions. For example, the sensor cell may mainly be receptive to a first analyte x when being heated to a first temperature Tx, and may mainly be receptive to a second analyte y when being heated to a second temperature Ty which is different from the first temperature Tx. To take advantage of this property, each of the sensor cells or specific groups of sensor cells may be provided with an individual heater. In other embodiments, all cells may be heated by the same heater. In some embodiments, the first and/or second sensor may comprise only a single sensor cell that has different sensitivities to multiple different analytes at different operating conditions.

In case the chemical sensor comprises more than one sensor element or sensor cell, the individual sensor cells may be embodied as discrete sensor cells. The sensor cells are preferably mounted on a common conductor board of the portable electronic device. The sensor cells may take the form of multiple chips. Each individual chip may be packaged, i.e. encapsulated, separately. In an alternative arrangement, multiple or all chips may be packaged in a common package, such that these chips are encapsulated by a common encapsulation. In a further embodiment, multiple or all sensor cells are monolithically integrated in a common sensor chip with a common substrate for multiple or all sensor cells. Such a monolithic multiple sensor chip may still be encapsulated and be arranged on and electrically connected to a conductor board of the portable electronic device.

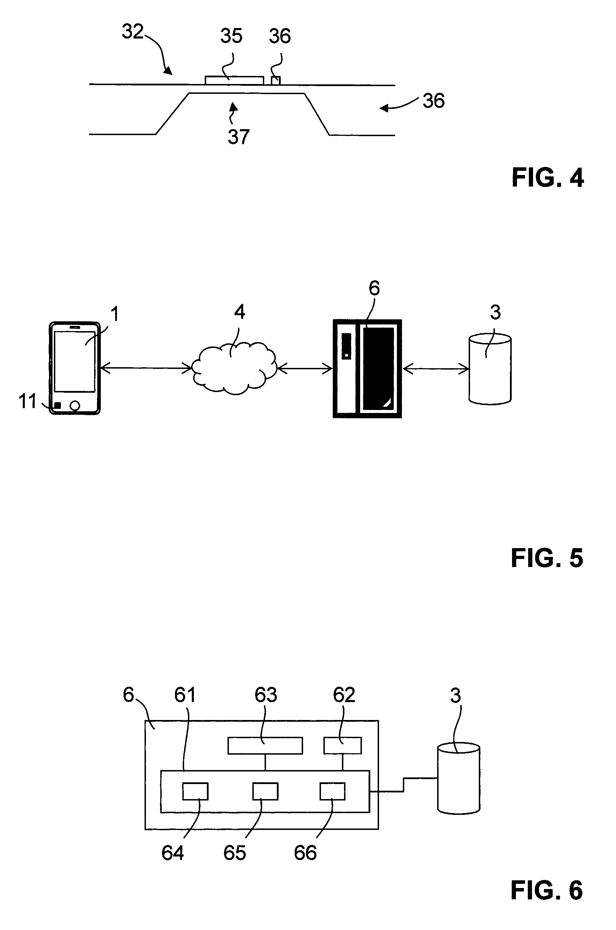

Figures 3 and 4 illustrate, in a highly schematic manner, an example of a sensor chip 30 implementing a chemical sensor as discussed above. The chip 30 comprises a chemical sensor structure 31 which takes the form of a sensor array comprising multiple sensor cells 32, in the present example, six times six sensor cells 32. In addition a humidity sensitive structure 33 may be arranged next to the chemical sensor structure 32, and electronic circuitry 34 is integrated into the chemical sensor chip 30, which electronic circuitry 34 is responsible for linearizing and A/D converting the sensor signal and for outputting a measured variable. The humidity sensitive structure 33 may also be a discrete component mounted in the vicinity of the chemical sensor chip 30. This latter circuitry may comprise the memory 110 that has been discussed in connection with Fig. 2. Figure 4 illustrates a cut through a schematic individual sensor cell 32. A recess is manufactured into a substrate 38 of the sensor chip to obtain a thin membrane 37. A sensitive layer 35 is arranged on top of the thin membrane, and a resistive heater 36 is arranged in or on top of the membrane. The membrane may be denoted as a micro-hotplate. The sensitive layer 35 is made of a metal oxide material. It is heated by the heater 36 prior to and during taking a sensor reading, so as to ensure that the temperature of the sensitive layer 35 is sufficient for having a catalytic reaction between the analyte/s and the sensitive layer 35 take place at a sufficient rate. As a result, an electrical conductivity of the sensitive layer 35 is modified. The operating temperature may vary subject to the material used from about 100 °C to about 450 °C.

However, the invention is not limited to MOX sensors. For instance, a sensor may be used that functions on an optical principle, i.e., an optical property of a sensor material may be modified such as its transmission rate, and this optical property is determined. Another possible measurement principle is a chemomechanical principle, in which a mass change upon absorption is transformed into a surface acoustic wave or into a cantilever resonance, for example.

Applications may include the detection of toxic gases, the detection of ethanol in a user's breath, the detection and/or identification of odors, and many more. Hence, the mobile phone equipped with the chemical sensor may in addition to its original function provide chemical information as to its environment. The user may learn about chemical substances and compositions present in the device's surroundings, and may use, transmit or else further analyze such information. Such information may be transmitted elsewhere and be used elsewhere, or the user himself/herself may benefit from the information provided by the chemical sensor. The electronic device may be primarily designed for computing and/or telecommunication and/or other tasks in the IT arena, but may be enhanced by the function of providing chemical information as to its environment.

Figure 5 illustrates how the mobile phone 1 connects to a remote evaluation unit in the form of a server 6 through a network 4. The remote evaluation unit is connected to a database 3. The database 3 may be in the same location as the evaluation unit 6, or it may be in a different location. The server 6 and the database 3 interact to carry out various tasks, including analysis of sensor-related data that are transmitted to the server 6 from mobile phones and authentication of mobile phones that are trying to connect to the server 6. In this regard, the server 6 and the database 3 may be considered to form an authentication system.

A highly schematic block diagram of a possible embodiment of the server 6 is illustrated in Figure 6. The server has a processor 61, a memory 62 and a network communication module 63. The processor 61 executes a server program that has several software modules, including the following: a receiving module 64 configured to receive sensor-related data from portable electronic devices such as the mobile phone 1; an extraction module 65 configured to extract a cryptographic sensor identifier from the sensor-related data; and a comparison module 66 configured to compare the cryptographic sensor identifier to authentication information stored in the database 3.

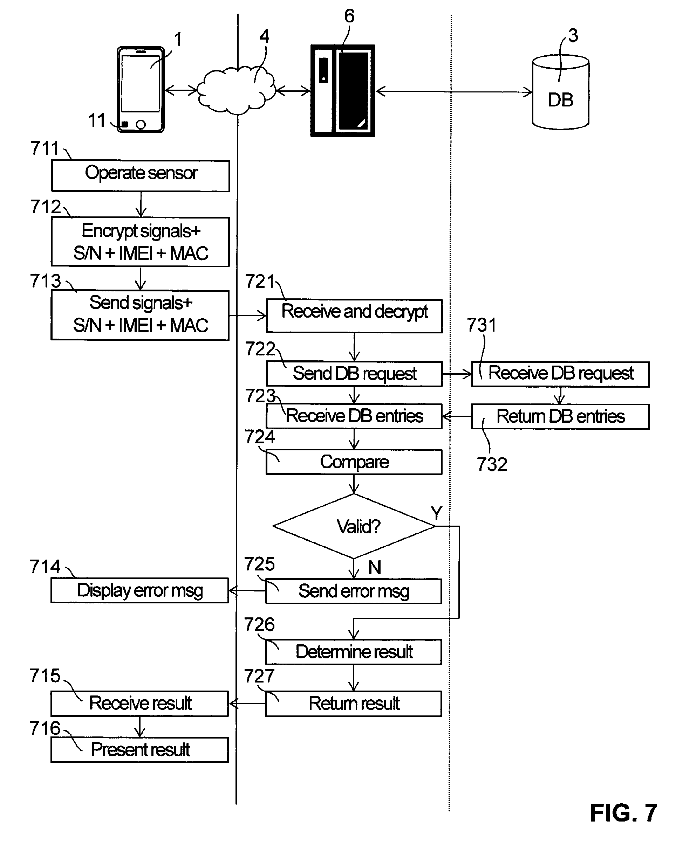

Figure 7 shows a flow diagram that illustrates a possible protocol for sensor authentication and subsequent data analysis. In step 711, the mobile phone 1 carries out a measurement with the sensor 11. This can be done by carrying out a program element in a processor of the mobile phone 1, wherein the program element may be part of the mobile phone's operating system or part of an application program running in the mobile phone. The mobile phone reads the cryptographic sensor identifier S/N from the memory 110. It furthermore reads out a device-specific identifier chosen by the device or operating system manufacturer, and/or the IMEI number of the mobile phone and/or the MAC addresses of the mobile phone's network interfaces from a memory of the mobile phone. The cryptographic sensor identifier S/N, the device-specific identifier, the IMEI number and the MAC addresses represent identifiers for the sensor identity and the identity of the mobile phone, respectively.

The mobile phone 1 then creates a data structure containing, e.g., raw or preprocessed sensor signals together with these identifiers and encrypts this data structure with a suitable encryption algorithm, for instance a public key algorithm (step 712). The mobile phone sends the encrypted data structure through one of its network interfaces and the network 4 to the server 6 (step 713). In step 721, the server 6 receives the encrypted data structure and decrypts the data structure with a suitable decryption algorithm to obtain the clear text data structure. The server 6 then extracts the various identifiers, i.e. the cryptographic sensor identifier, and device identifiers like the IMEI number and the MAC addresses, from the clear text data structure.

In step 722, server 6 sends a request to the database 3 for database entries matching any of these identifiers. In step 731, the database 3 receives the database requests and returns the requested items in step 732. In step 723, the server 6 receives the database entries. In step 724, it compares the received identifiers with the database entries to determine whether the database contains entries that match the received identifiers, and whether the received identifiers are consistent with one another, i.e. whether the database entries indicate that the received identifiers all belong to the same portable electronic device. If this is the case, the received identifiers are considered to be valid.

If any one of the identifiers or their combination turns out to be invalid, the server 6 creates and sends a corresponding error message to the mobile phone (step 725). The mobile phone may then display the error message in step 714, e.g., "Sensor not recognized by server". If, on the other hand, the identifiers are valid, the server 6 continues to extract the received sensor signals from the data structure, to analyze the sensor signals in step 726 and to return the result of the analysis to the mobile phone 1 in step 727. The mobile phone will then receive the result in step 715 and present the result to the user in step 716.

For instance, the result that is returned in step 727 may comprise a corrected sensor reading that has been derived from the received sensor signals by applying calibration values that are stored in the database 3 individually for the particular sensor 11 that has been authenticated. In other embodiments, the result may include updated calibration values that may subsequently be applied to raw or preprocessed sensor signals locally in the mobile phone 1. In yet another embodiment, the result may include an identifier for a particular odor or for a particular gas composition, e.g. "tulip" or "ozone".

It is also possible that the data structure that is created and transmitted in steps 712 and 713 does not contain any sensor signals at all. For instance, it is possible that the server 6 requests the sensor signals from the mobile phone 1 only once the sensor has been authenticated. In other embodiments, the data structure may form a request for the server to return calibration parameters for the particular sensor identified by the cryptographic sensor identifier. For instance, the data structure may contain indicators of the sensor history, and the server 6 may be operable to derive calibration parameters from the sensor history, taking into account calibration parameters of other sensors that belong to the same batch, these calibration parameters being stored in the database 3. The server 6 may further be operable to modify the database 3 after having received the data structure, e.g. by modifying calibration parameters and/or indicators of the sensor history for the sensor that has been identified by the cryptographic sensor identifier, by creating new database entries relating to certain measurements that have been carried out by the sensor, etc. Many other possibilities exist for the kind of analysis that may be carried out by the server 6.

Whereas in the present example both authentication and data analysis are carried out by the same server and involve the same database, these tasks may also be split over more than one server and may involve separate databases for storing authentication data and for storing other sensor-related data such as calibration values, sensor history or individual measurement results.

Whereas in the present example analysis is carried out either entirely on the server 6 or entirely in the mobile phone 1, only parts of the processing and analysis may be carried out in the mobile phone 1 and the server 6, respectively. For instance, the data structure transmitted from the mobile phone to the server 6 may comprise a sensor reading to which calibration parameters have already been applied in the mobile phone 1, and the analysis carried out in the server 6 may be confined to applying additional analysis steps to this sensor reading, such as identification of a particular odor or gas composition by comparing the sensor readings to database entries.

From the above examples, it will have become apparent that many modifications are possible without leaving the scope of the present invention. In particular, the present invention is not restricted to any particular type of data analysis to be carried out after authentication has been completed. Furthermore, the present invention is not restricted to any particular type of chemical sensor. It is applicable to chemical sensors having only one single sensor cell as well as to multi-analyte sensors having a plurality of sensor cells, or to sensor arrays.

## Claims

1. A method of authenticating a chemical sensor (11) of a portable electronic device (1), the method comprising:
reading a cryptographic sensor identifier from a memory (110) of the chemical sensor (11);
transmitting sensor-related data from the portable electronic device (1) to a remote evaluation unit (6), the sensor-related data comprising the cryptographic sensor identifier.

2. The method of claim 1, wherein the cryptographic sensor identifier is obtained from a clear-text sensor identifier by application of an encryption algorithm.

3. The method of claim 1 or 2, wherein the evaluation unit (6) is communicatively connected to a database (3) that stores authentication information about a set of chemical sensors, the method comprising:
receiving the sensor-related data by the evaluation unit (6);
extracting the cryptographic sensor identifier from the received sensor-related data; and
comparing the extracted cryptographic sensor identifier to authentication information stored in the database (3).

4. The method of any one of the preceding claims, wherein the sensor-related data that contain the cryptographic sensor identifier are transmitted to the evaluation unit (6) in encrypted form.

5. The method of any one of the preceding claims, wherein the sensor-related data further comprise a device identifier for the portable electronic device (1).

6. The method of claim 5, comprising:
carrying out a consistency check between the cryptographic sensor identifier and the device identifier.

7. The method of claim 5 or 6, wherein the device identifier is derived from an International Mobile Station Equipment Identity (IMEI) number of the portable electronic device (1) and/or from a Media Access Control (MAC) address of one or more network interfaces of the portable electronic device (1).

8. The method of any one of the preceding claims, comprising:
associating the sensor identifier with a user account of a user of the portable electronic device (1); and
employing the sensor identifier for authentication of users of the user account.

9. A portable electronic device (1) comprising:
a chemical sensor (11) having a memory (110) in which a cryptographic sensor identifier is stored; and
a control unit (21) configured to read the cryptographic sensor identifier from the memory (110) and to transmit sensor-related data from the portable electronic device (1) to a remote evaluation unit (6), the sensor-related data comprising the cryptographic sensor identifier.

10. The portable electronic device of claim 9, wherein the control unit (21) is configured to encrypt the sensor-related data and to transmit the sensor-related data to the evaluation unit (6) in encrypted form.

11. An authentication system for authenticating chemical sensors in portable electronic devices, the system comprising:
an evaluation unit (6) configured for communication with a plurality of portable electronic devices (1); and
a database (3) communicatively connected to the evaluation unit (6), the database (3) storing authentication information about a set of chemical sensors (11),
wherein the evaluation unit (6) comprises:
a receiving module (64) configured to receive sensor-related data from the portable electronic devices (1);
an extraction module (65) configured to extract a cryptographic sensor identifier from the sensor-related data; and
a comparison module (66) configured to compare the cryptographic sensor identifier to authentication information stored in the database (3).

12. The authentication system of claim 11, wherein the receiving module (64) is configured to receive the sensor-related data in encrypted form and to decrypt the sensor-related data.

13. The authentication system of claim 11 or 12, wherein the extraction module (65) is configured to extract a device identifier for the portable electronic device (1) from the sensor-related data, and wherein the comparison module (66) is configured to carry out a consistency check between the cryptographic sensor identifier and the device identifier.

14. A computer program element comprising computer code that, when executed in a processor of a portable electronic device (1) comprising a chemical sensor (11), carries out the following steps:
reading a cryptographic sensor identifier from a memory (110) of the chemical sensor (11);
transmitting sensor-related data from the portable electronic device (1) to a remote evaluation unit (6), the sensor-related data comprising the cryptographic sensor identifier.

15. A computer program element comprising computer code that, when executed in a processor of an evaluation unit (6) connected to a database (3), carries out the following steps:
receiving sensor-related data from portable electronic devices (1);
extracting a cryptographic sensor identifier from the sensor-related data; and
comparing the cryptographic sensor identifier to authentication information stored in the database (3).
